# EUROPÄISCHE PATENTSCHRIFT

(11) **EP 1 867 534 B1**
(45) Veröffentlichungstag und Bekanntmachung des Hinweises auf die Patenterteilung: **18.03.2009**
(21) Anmeldenummer: 07010944.2
(22) Anmeldetag: 04.06.2007
(51) Int. Cl.: B60R 22/34

(54) **Sicherheitsgurteinrichtung für ein Kraftfahrzeug**
Safety belt device for a motor vehicle
Dispositif de ceinture de sécurité pour véhicule automobile

(30) Priorität: 17.06.2006 DE 102006027897
(43) Veröffentlichungstag der Anmeldung: 19.12.2007
(73) Patentinhaber: Volkswagen Aktiengesellschaft, 38436 Wolfsburg (DE)
(72) Erfinder: Gonter, Mark, 30826 Garbsen (DE); Beesten, Benno, 38442 Wolfsburg (DE); Dramlitsch, Thomas, 10557 Berlin (DE); Wohllebe, Thomas, 38547 Calberlah (DE); Willems, Christian, 38321 Gross Denkte (DE)

(56) Entgegenhaltungen:
- EP-A1- 1 449 725
- WO-A-03/062025
- DE-A1-6102004 035 48
- DE-U1- 29 912 154
- GB-A- 2 312 148
- US-A1- 2003 192 975
- ANONYMOUS: "Constant payout force seat belt retractor" RESEARCH DISCLOSURE, MASON PUBLICATIONS, HAMPSHIRE, GB, Bd. 371, Nr. 21, März 1995 (1995-03), XP007120247 ISSN: 0374-4353

## Beschreibung

Die Erfindung betrifft eine Sicherheitsgurteinrichtung für ein Fahrzeug nach dem Oberbegriff des Patentanspruches 1.

Derartige Sicherheitsgurteinrichtungen weisen eine Wickeltrommel zum Auf- und Abwickeln eines Sicherheitsgurts auf. Bei am Fahrzeuginsassen angelegtem Sicherheitsgurt wird die Wickeltrommel im Falle einer unfallbedingten Fahrzeugverzögerung mit Hilfe einer Blockiereinrichtung blockiert, um einen Gurtauszug zu verhindern. Um dabei Verletzungen des Fahrzeuginsassen durch den angelegten Sicherheitsgurt zu vermeiden, kann eine Freigabeeinrichtung die Blockiereinrichtung freigeben, um einen begrenzten Gurtauszugsweg des Sicherheitsgurts zu ermöglichen.

Aus der DE 10 2004 035 486 ist eine gattungsgemäße Sicherheitsgurteinrichtung für ein Fahrzeug bekannt, bei der die Freigabeeinrichtung in Abhängigkeit von einer Fahrzeugverzögerung die Blockiereinrichtung freigeben kann. Die Blockiereinrichtung besteht aus einer Anzahl von in Reihe angeordneten Anschlagstiften, welche Anschläge zum Blockieren einer Bewegung einer Zahnstange bilden. Die Zahnstange kämmt mit einem Zahnrad, das mit einer Wickeltrommel für den Sicherheitsgurt gekoppelt ist. Die Bewegungsrichtung der Zahnstange, welche durch die Anschlagstifte blockiert wird, entspricht dabei derjenigen Bewegungsrichtung, die eine, einen Gurtauszug herbeiführende Drehung des mit der Zahnstange kämmenden Zahnrades ergeben würde. Die Anschlagstifte blockieren daher den Gurtauszug. Die Anschlagstifte werden mit einer vorgegebenen Kraft in Position gehalten und können mittels der Freigabeeinrichtung gegen diese Kraft aus ihrer Position verschoben werden. Die Freigabeeinrichtung ist hier ein bei einer Fahrzeugverzögerung verschiebbarer Beschleunigungskörper. Im Falle eines Frontalaufpralles des Fahrzeugs erfolgt eine Beschleunigung des Beschleunigungskörpers in Richtung auf die Anschlagstifte. Wenn der Beschleunigungskörper mit einer ausreichend großen Kraft gegen eine Schrägfläche des entsprechenden Anschlagstiftes der Blockiereinrichtung anschlägt, so wird dieser Anschlagstift aus seiner Position verschoben und gibt somit eine, den Gurtauszug ermöglichende Bewegung der Zahnstange frei.

Wie oben beschrieben ist, weist die Blockiereinrichtung eine Mehrzahl von Anschlagstiften auf, die mit ihren Anschlagflächen gegenüber der Zahnstange und mit ihren Schrägflächen gegenüber der Freigabeeinrichtung auszurichten sind. Entsprechend schwierig gestaltet sich der Zusammenbau der Blockier- und Freigabeeinrichtung.

Die Aufgabe der Erfindung besteht darin, eine Sicherheitsgurteinrichtung für ein Fahrzeug bereitzustellen, die einen beschleunigungsbasierten Gurtauszug zulässt und die in einfacher Weise aufgebaut ist.

Die Aufgabe der Erfindung ist durch die Merkmale des Patentanspruches 1 gelöst. Vorteilhafte Weiterbildungen der Erfindung sind in den Unteransprüchen offenbart.

Gemäß dem kennzeichnenden Teil des Patentanspruches 1 weist die Blockiereinrichtung eine selbsthemmende Reibungsvorrichtung auf, die den Gurtauszug des Sicherheitsgurts bei einer Fahrzeugkollision blockiert. Im Falle einer unfallbedingten Fahrzeugverzögerung kann die Freigabeeinrichtung in einfacher Weise durch Aufhebung der Selbsthemmung der Reibungsvorrichtung die Blockiereinrichtung freigeben, um dem Sicherheitsgurt einen begrenzten Auszugsweg bereitzustellen.

Bevorzugt ist es, wenn die Freigabeeinrichtung in Abhängigkeit von der Fahrzeugverzögerung aktivierbar ist, um eine Verletzung des Fahrzeuginsassen zu vermeiden. Eine solche beschleunigungsabhängige Gurtauszugsregelung erfolgt - im Gegensatz zu einer kraftbegrenzten Gurtauszugsregelung - unabhängig vom Gewicht des angeschnallten Fahrzeuginsassen.

Die mit der Reibungsvorrichtung ausgeführte Blockiereinrichtung ist in einfacher Weise mit einem Seil realisierbar, das zur Erzeugung einer Seilreibungskraft mit einer Anzahl von Wicklungen um ein feststehendes Reibungselement reibschlüssig gewickelt ist. Bei einer entsprechend gewählten Reibpaarung zwischen dem Reibungselement und den Seilwicklungen ergibt sich somit eine Seilreibung, die bei einer kollisionsbedingten Fahrzeugverzögerung die Wickeltrommel des Sicherheitsgurts zuverlässig blockiert. In diesem Fall kann die Freigabeeinrichtung zur Aufhebung der Selbsthemmung der Reibungsvorrichtung die Seilwicklungen um das Reibungselement lockern. Die Seilwicklungen können in einfacher Weise dadurch gelockert werden, dass die Freigabeeinrichtung das Seil entgegen der Aufwickelrichtung um das feststehende Reibungselement schiebt. Damit sich in diesem gelockerten Zustand die Seilwicklungen nicht einander überlagern, können diese zumindest teilweise in einem Ringspalt geführt sein, der das feststehende Reibungselement von einem äußeren Hohlzylinder beabstandet.

Die Freigabeeinrichtung kann in einfacher Weise durch ein Stellglied realisiert sein, das sich bei einer Fahrzeugverzögerung in der Fahrtrichtung über einen Stellweg verschieben kann. Mit dieser Verlagerung in der Fahrtrichtung kann das Stellglied das Seil entgegen der Aufwickelrichtung um das feststehende Reibungselement schieben. Der sich ergebende Stellweg des Stellglieds hängt von der Größe der Fahrzeugverzögerung ab. Der dadurch begrenzt freigegebene Gurtauszugsweg des Sicherheitsgurts ist von der Länge des Stellwegs abhängig, nicht aber von der anliegenden Gurtkraft.

Besonders bevorzugt ist es, wenn das Stellglied ein Beschleunigungskörper ist, der ohne zusätzliche elektrische Hilfsenergie bei einer Fahrzeugverzögerung gegen eine vorgegebene Kraft in.der Fahrtrichtung über einen Stellweg verschiebbar ist.

Wie bereits beschrieben ist, werden bei einer Verlagerung des Stellglieds über den Stellweg die Seilwicklungen um das Reibungselement gelockert, wodurch die Selbsthemmung zwischen den Seilwicklungen und dem feststehenden Reibungselement kurzzeitig aufgehoben wird. Dadurch wird ein begrenzter Gurtauszug ermöglicht, bis die Seilwicklungen um das feststehende Reibungselement wieder gestrafft sind und die somit wieder eintretende Selbsthemmung einen weiteren Gurtauszug verhindert.

Alternativ kann das Stellglied nicht als ein Beschleunigungskörper ausgebildet sein, sondern über einen Antriebsmotor verschiebbar sein, der beschleunigungsabhängig von einer elektrischen Steuereinrichtung aktivierbar ist.

Gemäß einer alternativen Ausführungsform kann das Stellglied auch Teil einer Piezobremse sein, die beim Anlegen einer elektrischen Spannung gelöst werden kann. Durch das Lösen der Piezobremse kann das Stellglied die Seilwicklungen lockern. Die Piezobremse ist nahezu verzögerungsfrei ansprechbar und somit bevorzugt in einem elektrisch arbeitenden Regelkreis integrierbar.

Nachfolgend sind acht Ausführungsbeispiele der Erfindung anhand der Figuren beschrieben.

### Es zeigen:

- Fig. 1: in einer grob schematischen Teilansicht einer Sicherheitsgurteinrichtung gemäß dem ersten Ausführungsbeispiel;
- Fig. 2: das zweite Ausführungsbeispiel in einer Teilansicht entsprechend der Fig. 1;
- Fig. 3 und 4: in einer grob schematischen Ansicht eine Sicherheitsgurteinrichtung gemäß dem dritten Ausführungsbeispiel;
- Fig. 5: in einem Blockschaltbild die Sicherheitsgurteinrichtung gemäß dem vierten Ausführungsbeispiel;
- Fig. 6: in einem weiteren Blockschaltbild die Sicherheitsgurteinrichtung gemäß dem fünften Ausführungsbeispiel; und
- Fig. 7 bis 9: jeweils Ausführungsbeispiele für eine in der Sicherheitsgurteinrichtung eingesetzte Piezobremse.

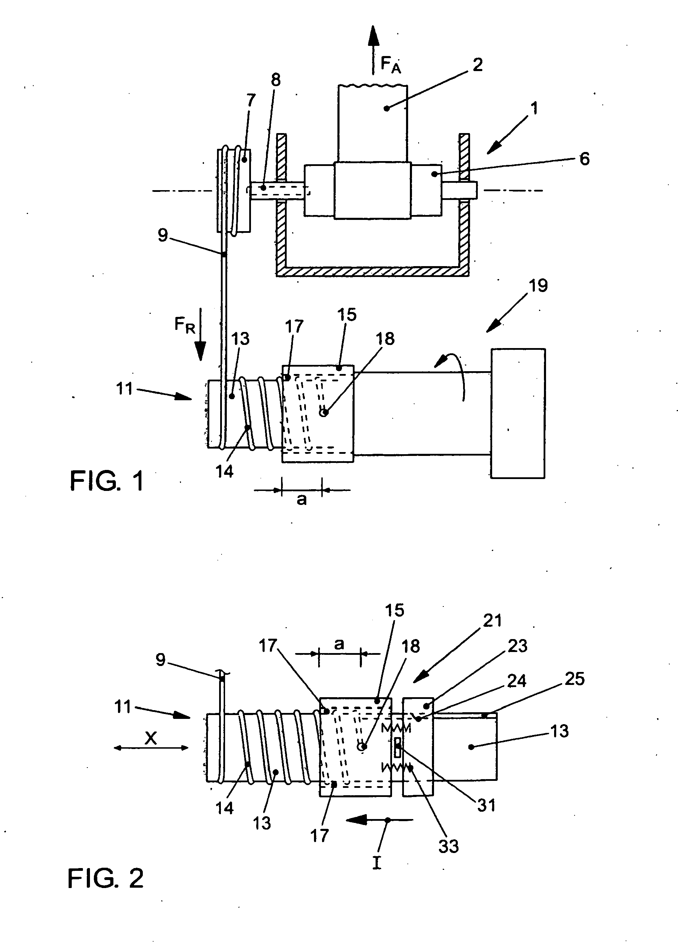

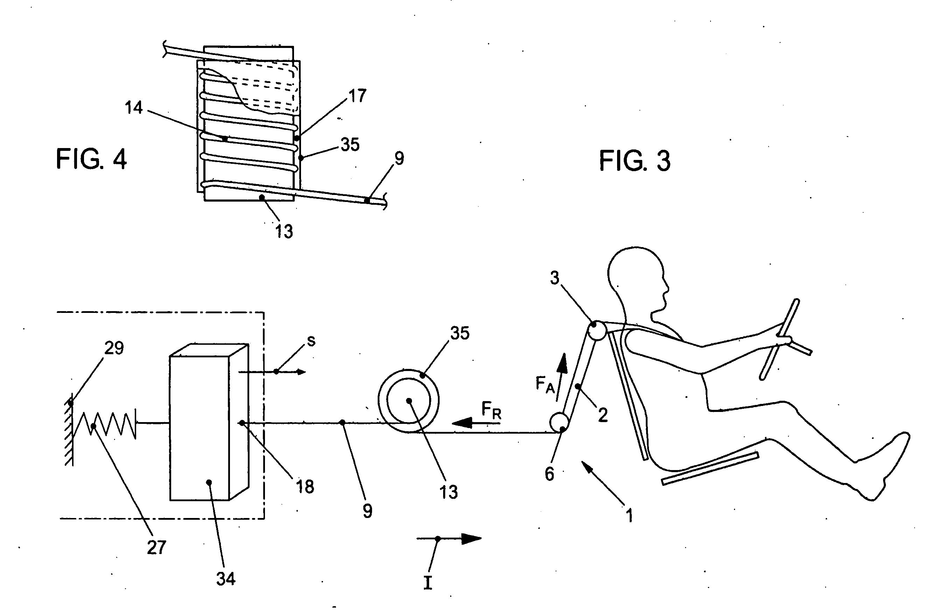

In der Fig. 1 ist ein Gurtaufroller 1 eines Insassen-Rückhaltesystems bzw. einer Sicherheitsgurteinrichtung mit einem Sicherheitsgurt 2 gezeigt, der an einem Fahrzeuginsassen anlegbar ist. Der Sicherheitsgurt 2 ist, wie aus der Fig. 3 näher hervorgeht, über einen Umlenkbügel 3 zum Gurtaufroller 1 geführt. Der Gurtaufroller 1 weist in der Fig. 1 eine Wickeltrommel 6 zum Auf- und Abwickeln des Sicherheitsgurts 2 sowie eine Sperrscheibe 7 auf, die koaxial zu der Wickeltrommel 6 angeordnet ist. Im normalen Fahrbetrieb, etwa beim Anlegen bzw. Ablegen des Sicherheitsgurts 1, ist die Wickeltrommel 6 unabhängig von der Sperrscheibe 7 frei drehbar. So wird beim Anlegen des Sicherheitsgurts 1 durch den Fahrzeuginsassen der Sicherheitsgurt 1 entgegen der Kraft einer nicht gezeigten Rückstellfeder von der Wickeltrommel 6 abgewickelt. Die Rückstellfeder gewährleistet, dass der Sicherheitsgurt 1 im angelegten Zustand straff am Fahrzeuginsassen anliegt, und dass der Sicherheitsgurt 1 beim Ablegen wieder auf die Wickeltrommel 6 gewickelt wird. Das bei einer Fahrzeugkollision vom angelegten Sicherheitsgurt 1 auf die Wickeltrommel 6 übertragene Drehmoment bewirkt, dass Fliehkräfte und/oder Trägheitskräfte auf ein Kupplungselement 8 einwirken, das in der Fig. 1 nur gestrichelt angedeutet ist. Das Kupplungselement 8 ist zwischen der Wickeltrommel 6 und der Sperrscheibe 7 geschaltet. Dadurch wird gemäß der Fig. 1 das Kupplungselement 8 in seine Kupplungsstellung verlagert, in der die Wickeltrommel 6 gegenüber der Sperrscheibe 7 verriegelt ist. Somit ist ein Abwickeln des Sicherheitsgurts 1 von der Wickeltrommel 6 und damit eine Vorverlagerung des angeschnallten Fahrzeuginsassen verhindert.

Um die in der Fig. 1 gezeigte Sperrscheibe 7 ist ein Stahlseil 9 gewickelt, das die Sperrscheibe 7 mit einer Blockiereinrichtung 11 verbindet. Die Blockiereinrichtung 11 ist als eine Reibungsvorrichtung mit einem feststehenden Zylinder 13 ausgeführt, um den das von der Sperrscheibe 7 kommende Stahlseil 9 hier beispielhaft sechsfach gewickelt ist. Die sechs Wicklungen 14 des Stahlseils 9 sind teilweise von einer Stellhülse 15 ummantelt, die über einen Ringspalt 17 vom Zylinder 13 beabstandet ist. Die Stellhülse 15 kann als eine Freigabeeinrichtung auf die Blockiereinrichtung 11 einwirken, um die Blockiereinrichtung 11 freizugeben und um somit einen begrenzten Gurtauszug des Sicherheitsgurts 2 zuzulassen.

Wie aus der Fig. 1 hervorgeht, ist das Seilende 18 des um den Zylinder 13 gewickelten Stahlseils 9 in einem Axialabstand a von einer freien Stirnseite der Stellhülse 15 beabstandet an deren Innenwandung befestigt. Die Stellhülse 15 ist mit ihrer gegenüberliegenden Stirnseite mit einem Schrittmotor 19 in Verbindung. Bei der Aktivierung des Schrittmotors 19 kann die Stellhülse 15 als ein Aktuator das Seilende 18 des Stahlseils 9 entgegen einer Aufwickelrichtung der Seilwicklungen 14 verstellen, wie es später beschrieben ist.

Bei einer Fahrzeugkollision beschleunigt ein Fahrzeuginsasse mit angelegtem Sicherheitsgurt 2 in der Fahrtrichtung. Der Sicherheitsgurt 2 übt daher gemäß der Fig. 1 mit einer Auszugskraft F_{A} ein Drehmoment auf die Wickeltrommel 6 aus. Aufgrund entstehender Fliehkräfte verstellt sich das Kupplungselement 8 in seine Sperrposition, in der die Sperrscheibe 7 drehfest mit der Wickeltrommel 6 verbunden ist. Dem somit auf die Sperrscheibe 7 ausgeübten Drehmoment wird von der Blockiereinrichtung 11 eine Reibungskraft F_{R} bzw. ein Rückhaltemoment entgegengesetzt, das durch die Seilreibung zwischen den Stahlseilwicklungen 14 und dem Zylinder 13 erzeugt wird.

Durch die Stellbewegung der Stellhülse 15 in Umfangsrichtung wird das Seilende 18 entgegen der Wickelrichtung der Seilwicklungen 14 geschoben. Damit lockern sich die um den Zylinder 13 gewickelten Stahlseilwicklungen 14, wodurch die Selbsthemmung gelöst wird. Entsprechend kann sich die Sperrscheibe 7 mitsamt der Wickeltrommel 6 begrenzt drehen, bis die Seilwicklungen 14 um den Zylinder 13 wieder gestrafft sind.

Der Ringspalt 17 zwischen dem Zylinder 13 und der Stellhülse 15 weist gemäß der Fig. 1 eine Spaltbreite auf, die in etwa dem Seildurchmesser entspricht. Somit gewährleistet der Ringspalt 17 eine Führung der Seilwicklungen 14, so dass diese sich im gelockerten Zustand nicht überlagern können.

In dem zweiten Ausführungsbeispiel der Fig. 2 ist das von der nicht gezeigten Sperrscheibe 7 kommende Stahlseil 9 ebenfalls um den feststehenden Zylinder 13 gewickelt und mit seinem Seilende 18 innenseitig an der Stellhülse 15 befestigt. Im Unterschied zur Fig. 1 ist jedoch die Stellhülse 15 nicht mit dem Schrittmotor in Verbindung, sondern ist die Stellhülse 15 Teil einer Piezobremse 21, die einerseits aus der Stellhülse 15 und andererseits aus einer axial benachbarten Bremshülse 23 besteht. Die Bremshülse 23 ist über einen Führungszahn 24 in einer Längsnut 25 des Zylinders 13 axial verschiebbar geführt, während die Stellhülse 15 sowohl in Umfangsrichtung des Zylinders 13 als auch in dessen Axialrichtung verstellbar gelagert ist. Zwischen der Stellhülse 15 und der Bremshülse 23 sind ein Piezoelement 31 und Zugfedern 33 angeordnet.

Im Normalzustand sind die Stellhülse 15 und die Bremshülse 23 mit ihren gegenüberliegenden Stirnseiten in Flächenpressung mittels der Zugfedern 33 zusammengepresst. Dadurch ist die Stellhülse 15 drehfest an der Bremshülse 23 festgelegt.

Gemäß der Fig. 2 erstreckt sich der Zylinder 13 der Blockiereinrichtung 11 in der Fahrzeuglängsrichtung I, so dass die verschiebbar gelagerte Piezobremse 21 bei einer Fahrzeugkollision in der Pfeilrichtung I als Beschleunigungskörper verlagert wird. Durch die Verlagerung der Piezobremse 21 in der Pfeilrichtung I reduziert sich ein Steigungswinkel der Seilwicklungen 14 im Bereich des Seilendes 18. Dadurch lockern sich die Seilwicklungen 14, so dass eine Selbsthemmung zwischen den Seilwicklungen 14 und dem feststehenden Zylinder 13 aufgehoben ist.

Bei der Fahrzeugkollision wird - wie bereits anhand der Fig. 1 beschrieben - zunächst die Wickeltrommel 6 über das Kupplungselement 8 drehfest mit der Sperrscheibe 7 gekoppelt. Dadurch ist ein Gurtauszug des am Fahrzeuginsassen angelegten Sicherheitsgurts 2 verhindert.

Für den Fall, dass gemäß der Fig. 2 die von einem nicht gezeigten Sensor erfasste Fahrzeugverzögerung einen vorgegebenen Grenzwert übersteigt, wird mittels einer nicht gezeigten Steuereinrichtung eine Spannung an das Piezoelement 31 angelegt. Dadurch dehnt sich das Piezoelement 31 kurzzeitig, beispielsweise für wenige Millisekunden, aus. Auf diese Weise löst das Piezoelement 31 entgegen der Kraft der Zugfedern 33 die Flächenpressung zwischen der Stellhülse 15 und der Bremshülse 23. In diesem Zustand ist die Stellhülse 15 gemäß der Fig. 2 in der Zylinderumfangsrichtung gegenüber der Bremshülse 23 frei drehbar. Bei der in der Fig. 2 gelösten Piezobremse 21 kann sich somit das Stahlseil 9 vom feststehenden Zylinder 13 begrenzt abwickeln. Durch das sich begrenzt abwickelnde Stahlseil 9 wird dem Sicherheitsgurt 21 ein begrenzter Gurtauszugsweg bereitgestellt, bis die Piezobremse 21 wieder geschlossen wird.

In dem dritten Ausführungsbeispiel gemäß den Figuren 3 und 4 wird die Fahrzeugverzögerung mechanisch mittels eines Beschleunigungskörpers 34 erfasst. Hierzu ist das Seilende 18 des um den feststehenden Zylinder 13 gewickelten Stahlseils 9 nicht mit einer Stellhülse, sondern mit dem Beschleunigungskörper 34 verbunden. Der Beschleunigungskörper 34 ist über eine Zugfeder 27 mit einem karosserieseitigen Stützabschnitt 29 verbunden. Die Wicklungen 14 des Stahlseils 9 sind in dem zwischen dem Zylinder 13 und einem Hohlzylinder 35 gebildeten Ringspalt 17 angeordnet, durch den die Seilwicklungen 14 geführt sind.

Gemäß der Fig. 3 und 4 erfolgt die Gurtauszugssteuerung bei an einem Insassen angelegtem Sicherheitsgurt 2 im Fahrzeugkollisionsfall beschleunigungsabhängig. In einem solchen, Kollisionsfall beschleunigt der Insasse in der Fahrtrichtung, wodurch gemäß der Fig. 1 mit einer Auszugskraft F_{A} ein Drehmoment auf die Wickeltrommel 6 ausgeübt wird. Dadurch wird das Kupplungselement 8 aufgrund von entstehenden Trägheitskräften bzw. Fliehkräften in seine Sperrposition verstellt, bei der die Wickeltrommel 6 drehfest an der Sperrscheibe 7 festgelegt ist.

Ab einer vordefinierten Größe der Fahrzeugverzögerung bewegt sich gemäß der Fig. 3 der Beschleunigungskörper 34 entgegen der Zugkraft der Zugfeder 27 um einen Stellweg s in die Fahrtrichtung I. Dadurch wird das Stahlseil 9 entgegen der Aufwickelrichtung der Seilwicklungen 14 um den Zylinder 13 geschoben. Die um den Zylinder 13 gewickelten Seilwicklungen 14 werden somit teilweise gelockert, so dass die Selbsthemmung zwischen dem Stahlseil 9 und dem Zylinder 13 gelöst wird. Die Selbsthemmung kann so derart reduziert werden, dass die Sperrscheibe 7 das Stahlseil 9 um eine begrenzte Seillänge von dem Zylinder 13 abwickelt, bis die Wicklungen 14 auf dem Zylinder 13 wieder vollständig gestrafft sind. In diesem Zustand ist die Seilreibung F_{R} wieder größer als die auf das Seil 9 wirkende Auszugskraft F_{A}.

Der Ringspalt 17 zwischen dem Hohlzylinder 35 und dem Zylinder 13 weist dabei eine Spaltbreite auf, die in etwa dem Seildurchmesser entspricht. Durch den Ringspalt 17 ist eine Führung der Seilwicklungen 14 gewährleistet, so dass diese im gelockerten Zustand nicht einander überlagern können.

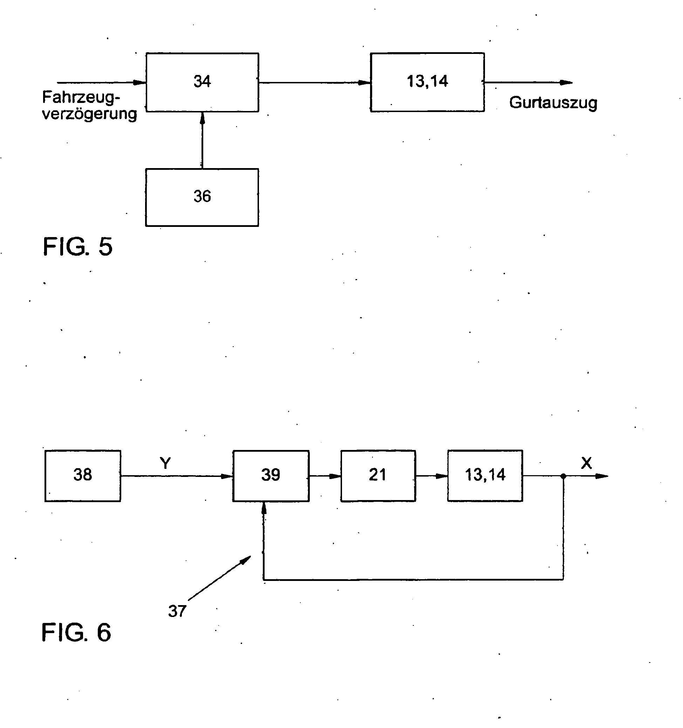

In der Fig. 5 ist gemäß dem vierten Ausführungsbeispiel ein Blockschaltbild gezeigt, das in dem Rückhaltesystem der Fig. 4 anwendbar ist. Im Unterschied zu dem dritten Ausführungsbeispiel der Fig. 3 und 4 wirkt auf den Beschleunigungskörper 34 mit seiner Referenzmasse nicht eine Zugfeder, sondern auch eine Piezobremse 36 ein. Die Piezobremse 36 ist dabei mittels einer nicht gezeigten Steuereinrichtung gesteuert in Reibungskontakt mit dem Beschleunigungskörper 34 bringbar. Im Kollisionsfall ist somit durch Steuerung des Reibungskontakts zwischen der Piezobremse 36 und dem Beschleunigungskörper 34 dessen Stellweg s einstellbar. In Abhängigkeit von der Größe des Stellwegs s des Beschleunigungskörpers 34 kann in der aus dem Zylinder 13 und den Wicklungen 14 bestehenden Seilreibungsstufe die Selbsthemmung gelöst werden und somit der sich daraus ergebende Gurtauszug des Sicherheitsgurts 2 bereitgestellt werden.

In der Fig. 6 wird gemäß dem fünften Ausführungsbeispiel der bei der Fahrzeugverzögerung für den Sicherheitsgurt 2 bereitgestellte Gurtauszug mittels eines geschlossenen Regelkreises 37 eingestellt werden. Dieser im Blockschaltbild gezeigte Regelkreis 37 ist nachfolgend beispielhaft auf das in der Fig. 2 gezeigte Rückhaltesystem angewendet.

Demgemäß wird von einer Auswerteeinheit 38 mittels einer "virtuellen Referenzmasse" im Kollisionsfall eine Fahrzeugverzögerung ermittelt und in Abhängigkeit von beispielsweise der Insassenposition, eines zur Verfügung stehenden Vorverlagerungsweges, einer Unfallschwere und/oder einer aktuellen Fahrzeugverzögerung ein Soll-Gurtauszug y für den Regelkreis 37 bestimmt.

Ausgehend von diesem Soll-Gurtauszug y löst eine Steuereinrichtung 39 die Piezobremse 21 des Gurtkraftbegrenzers 11 gemäß der Fig. 2, wodurch sich ein Ist-Gurtauszug x einstellt. Der Ist-Gurtauszug x wird mittels eines nicht gezeigten Gurtauszug-Sensors erfasst und zur Steuereinrichtung 39 rückgemeldet wird. Anhand des rückgemeldeten Ist-Gurtauszuges kann die Steuereinrichtung 39 dann die Piezobremse 21 entsprechend angepasst angesteuert werden.

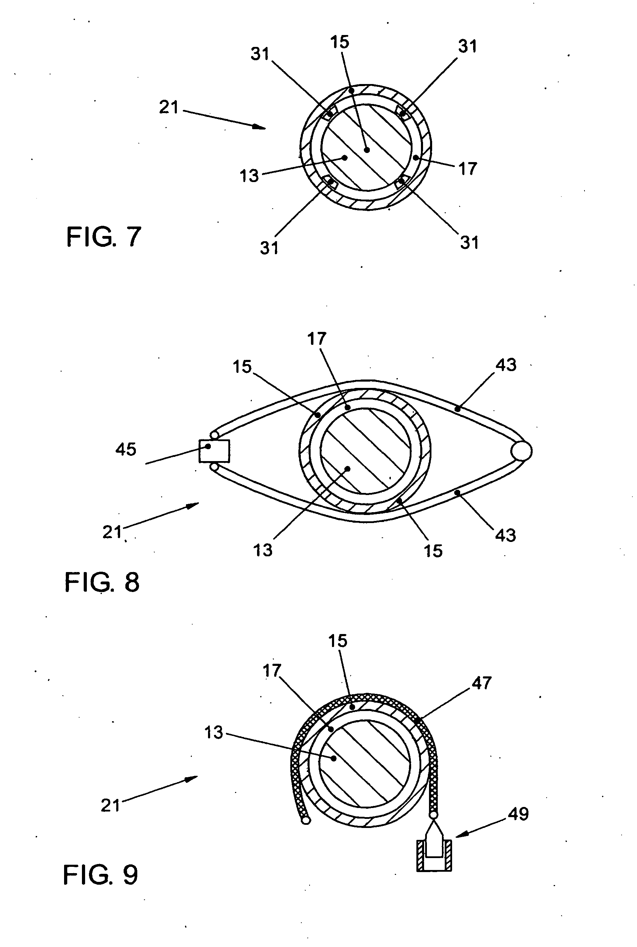

Die folgenden sechsten bis achten Ausführungsbeispiele der Fig. 7 bis 9 zeigen Abwandlungen der Piezobremse 21, wie sie in der Fig. 2 als Aktuator für die SeilReibungsvorrichtung verwendet ist. So ist in der Fig. 7 die Piezobremse 21 nicht mittels der Stellhülse 15 und der Bremshülse 23 ausgeführt, sondern weist die alternative Piezobremse 21 lediglich die Stellhülse 15 auf, die über den Ringspalt 17 von dem feststehenden Zylinder 13 beabstandet ist. Zur Ausbildung der Piezobremse 21 sind hierbei in dem Ringspalt 17 einzelne Piezoelemente 31 angeordnet, die beispielsweise mittels der Steuereinrichtung 39 aus der Fig. 6 ansteuerbar sind. Bei einer Aktivierung der Piezoelemente 31 kann die Reibungskraft zwischen den Piezoelementen 31 und dem feststehenden Zylinder 13 eingestellt werden.

In dem weiteren Ausführungsbeispiel der Fig. 8 weist die Piezobremse 21 zwei gegenüberliegende Bremsklammern 43 auf, zwischen denen die Stellhülse 15 angeordnet ist. Die Bremsklammern 43 sind an ihrem einen Ende gelenkig miteinander verbunden, während sie an ihren anderen Enden mit dem Piezoelement 45 gekoppelt sind. Die in der Fig. 8 gezeigte Piezobremse ist, wie auch die in der Fig. 2 gezeigte Piezobremse 21, bei einer Fahrzeugkollision zusammen mit der Stellhülse 15 in der Fahrzeuglängsrichtung verlagerbar, um eine Selbsthemmung der Seilwickelungen 14 zu lösen. Übersteigt dabei die Fahrzeugverzögerung einen vorgegebenen Wert, so wird dem Piezoelement 45 eine elektrische Spannung angelegt. Dadurch dehnt sich das Piezoelement 45 aus, so dass sich die reibschlüssig mit der Stellhülse 15 in Eingriff befindlichen Bremsklammern 43 lösen. Auf diese Weise kann sich die Stellhülse 15 in Umfangsrichtung drehen, um somit einen Gurtauszug bereitzustellen.

Anstelle der in der Fig. 8 gezeigten Bremsklammern 43 ist die Stellhülse 15 in dem Ausführungsbeispiel der Fig. 9 umfangsseitig mit einem Bremsband 47 in Verbindung, das die Stellhülse 15 teilweise umschlingt. Das eine Bandende des Bremsbandes 47 ist dabei ortsfest gehaltert, während das andere Ende mit einem Hubelement 49 gekoppelt ist. Das Hubelement 49 ist ein Piezoelement, das durch Anlegen einer Spannung eine Hubbewegung auf das Bremsband 47 übertragen kann. Somit wird bei einer solchen Ansteuerung des Piezoelements 49 das Bremsband 47 gelockert, wodurch die Stellhülse 15 sich in Umfangsrichtung drehen kann.

### Bezugszeichenliste

- 1: Gurtaufroller
- 2: Sicherheitsgurt
- 3: Umlenkbügel
- 6: Wickeltrommel
- 7: Sperrscheibe
- 8: Kupplungselement
- 9: Stahlseil
- 11: Blockiereinrichtung
- 13: Zylinder
- 14: Seilwicklungen
- 15: Stellhülse, Freigabeeinrichtung
- 17: Ringspalt
- 19: Schrittmotor
- 21: Piezobremse
- 23: Bremshülse
- 24: Führungszahn
- 25: Längsnut
- 27: Zugfeder
- 29: Stützabschnitt
- 31: Piezoelement
- 33: Zugfedern
- 34: Beschleunigungskörper, Freigabeeinrichtung
- 35: Hohlzylinder
- 36: Piezobremse
- 37: Regelkreis
- 38: Auswerteeinheit
- 39: Steuereinrichtung
- 45: Piezoelement
- 47: Bremsband
- a: Axialabstand
- s: Stellweg
- l: Fahrtrichtung

## Patentansprüche

1. Sicherheitsgurteinrichtung für ein Fahrzeug, die einen Gurtauszug eines Sicherheitsgurts (2) zulässt, mit einer Blockiereinrichtung (11) zum Blockieren des Gurtauszugs und einer auf die Blockiereinrichtung (11) einwirkenden Freigabeeinrichtung (15; 34) zur Freigabe der Blockiereinrichtung (11), um einen begrenzten Gurtauszugsweg des Sicherheitsgurts zu ermöglichen, **dadurch gekennzeichnet, dass** die Blockiereinrichturig (11) eine selbsthemmende Reibungsvorrichtung (13, 14) aufweist, die den Gurtauszug des Sicherheitsgurts (2) blockiert.

2. Sicherheitsgurteinrichtung nach Anspruch 1, **dadurch gekennzeichnet, dass** die Freigabeeinrichtung (15; 34) in Abhängigkeit von der Größe einer erfassten Fahrzeugverzögerung aktivierbar ist und zur Freigabe der Blockiereinrichtung (11) die Selbsthemmung der Reibungsvorrichtung (13, 14) kurzzeitig löst.

3. Sicherheitsgurteinrichtung nach einem der vorhergehenden Ansprüche, **dadurch gekennzeichnet, dass** die Reibungsvorrichtung (13, 14) ein Seil (9) aufweist, das zur Erzeugung der Selbsthemmung mit Seilwicklungen (14) um ein feststehendes Reibungselement (13) reibschlüssig gewickelt ist.

4. Sicherheitsgurteinrichtung nach Anspruch 3, **dadurch gekennzeichnet, dass** die Freigabeeinrichtung (15; 34) zum Lösen der Selbsthemmung die Seilwicklungen (14) um das Reibungselement (13) lockert.

5. Sicherheitsgurteinrichtung nach Anspruch 4, **dadurch gekennzeichnet, dass** die Freigabeeinrichtung (15; 34) zur Lockerung der Seilwicklungen (14) das Seil (9) entgegen der Aufwickelrichtung um das feststehende Reibungselement (13) schiebt.

6. Sicherheitsgurteinrichtung nach einem der Ansprüche 3 bis 5, **dadurch gekennzeichnet, dass** die Seilwicklungen (14) des um das Reibungselement (13) gewickelten Seils (9) zumindest teilweise in einem Ringspalt (17) geführt sind.

7. Sicherheitsgurteinrichtung nach einem der Ansprüche 5 oder 6, **dadurch gekennzeichnet, dass** die Freigabeeinrichtung (15; 34) ein, bei einer Fahrzeugverzögerung in Fahrtrichtung (I) über einen Stellweg (s) verschiebbares Stellglied aufweist, das das Seil (14) entgegen der Aufwickelrichtung um das feststehende Reibungselement (13) schiebt.

8. Sicherheitsgurteinrichtung nach Anspruch 7, **dadurch gekennzeichnet, dass** die Freigabeeinrichtung (15; 34) in Abhängigkeit von der Länge des Stellwegs (s) des Stellglieds einen begrenzten Gurtauszugsweg des Sicherheitsgurts (2) zulässt.

9. Sicherheitsgurteinrichtung nach Anspruch 8, **dadurch gekennzeichnet, dass** das Stellglied ein Beschleunigungskörper (34) ist, der bei einer Fahrzeugverzögerung in der Fahrtrichtung (FR) gegen eine vorgegebene Kraft über den Stellweg (s) verschiebbar ist.

10. Sicherheitsgurteinrichtung nach Anspruch 8, **dadurch gekennzeichnet, dass** das Stellglied über einen Antriebsmotor (19) verschiebbar ist, der in Abhängigkeit von der Größe der Fahrzeugverzögerung aktivierbar ist.

11. Sicherheitsgurteinrichtung nach Anspruch 8, **dadurch gekennzeichnet, dass** das Stellglied (15) Teil einer Piezobremse (21) ist, die durch Anlegen einer elektrischen Spannung aktivierbar ist.

12. Sicherheitsgurteinrichtung nach Anspruch 11, **dadurch gekennzeichnet, dass** die Piezobremse (21) als ein Beschleunigungskörper bei einer Fahrzeugverzögerung in Fahrtrichtung (FR) verschiebbar angeordnet ist.

13. Sicherheitsgurteinrichtung nach einem der vorhergehenden Ansprüche, **dadurch gekennzeichnet, dass** die Freigabeeinrichtung (15) mit einer elektronischen Steuereinrichtung (39) verbunden ist, die im Kollisionsfall die Freigabeeinrichtung (15) zur Freigabe der Blockiereinrichtung (11) aktiviert.

14. Sicherheitsgurteinrichtung nach Anspruch 13, **dadurch gekennzeichnet, dass** die Steuereinrichtung (39) zusammen mit der Freigabeeinrichtung in einem geschlossenen Regelkreis (37) geschaltet ist.

15. Sicherheitsgurteinrichtung nach Anspruch 14, **dadurch gekennzeichnet, dass** in dem Regelkreis (37) als Sollwert ein Soll-Gurtauszugsweg (y) vorgegeben und als Istwert ein Ist-Gurtauszugsweg (x) erfasst ist.

16. Sicherheitsgurteinrichtung nach Anspruch 15, **dadurch gekennzeichnet, dass** der Soll-Gurtauszugsweg (y) in einer Auswerteeinheit (38) in Abhängigkeit von Kollisionsparametern festgelegt ist.

## Claims

1. Seatbelt device for a vehicle, which permits belt extension of a seatbelt (2), having a blocking device (11) for blocking the belt extension and a release device (15; 34) which acts on the blocking device (11) and has the purpose of releasing the blocking device (11) in order to allow limited belt extension travel of the seatbelt, **characterized in that** the blocking device (11) has a self-locking friction device (13, 14) which blocks the belt extension of the seatbelt (2).

2. Seatbelt device according to Claim 1, **characterized in that** the release device (15; 34) can be activated as a function of the magnitude of a sensed vehicle deceleration and briefly releases the self-locking of the friction device (13, 14) in order to release the blocking device (11).

3. Seatbelt device according to one of the preceding claims, **characterized in that** the friction device (13, 14) has a cable (9) which is wound with cable windings (14) in a frictionally locking fashion about a fixed friction element (13) in order to generate the self-locking.

4. Seatbelt device according to Claim 3, **characterized in that** the release device (15; 34) loosens the cable windings (14) around the friction element (13) in order to release the self-locking.

5. Seatbelt device according to Claim 4, **characterized in that** the release device (15; 34) pushes the cable (9) counter to the winding-on direction around the fixed friction element (13) in order to loosen the cable windings (14).

6. Seatbelt device according to one of Claims 3 to 5, **characterized in that** the cable windings (14) of the cable (9) which is wound around the friction element (13) are guided at least partially in an annular gap (17).

7. Seatbelt device according to one of Claims 5 or 6, **characterized in that** the release device (15; 34) has an actuating element which can be displaced over an actuating travel (s) when the vehicle decelerates in the driving direction (1), which actuating element pushes the cable (14) counter to the winding-on direction around the fixed friction element (13).

8. Seatbelt device according to Claim 7, **characterized in that** the release device (15; 34) permits a limited belt extension travel of the seatbelt (2) as a function of the length of the actuating travel (s) of the actuating element.

9. Seatbelt device according to Claim 8, **characterized in that** the actuating element is an acceleration body (34) which can be displaced over the actuating travel (s) counter to a predefined force when the vehicle decelerates in the driving direction (FR).

10. Seatbelt device according to Claim 8, **characterized in that** the actuating element can be displaced by means of a drive motor (9) which can be activated as a function of the magnitude of the deceleration of the vehicle.

11. Seatbelt device according to Claim 8, **characterized in that** the actuating element (15) is part of a piezobrake (21) which can be activated by applying an electric voltage.

12. Seatbelt device according to Claim 11, **characterized in that** the piezobrake (21) is arranged so as to be displaceable as an acceleration body when the vehicle decelerates in the driving direction (FR).

13. Seatbelt device according to one of the preceding claims, **characterized in that** the release device (15) is connected to an electronic control device (39) which, in the event of a collision, activates the release device (15) in order to release the blocking device (11).

14. Seatbelt device according to Claim 13, **characterized in that** the control device (39) is connected together with the release device in a closed control circuit (37).

15. Seatbelt device according to Claim 14, **characterized in that,** in the control circuit (37), a setpoint belt extension travel (y) is predefined as a setpoint value and an actual belt extension travel (x) is sensed as an actual value.

16. Seatbelt device according to Claim 15, **characterized in that** the setpoint belt extension travel (y) is defined in an evaluation unit (38) as a function of collision parameters.

## Revendications

1. Dispositif de ceinture de sécurité pour un véhicule qui permet une sortie d'une ceinture de sécurité (2), avec un dispositif de blocage (11) pour bloquer la sortie de ceinture et un dispositif de libération (15 ; 34) agissant sur le dispositif de blocage (11) pour libérer le dispositif de blocage (11), afin de permettre une course de sortie de ceinture limitée de la ceinture de sécurité, **caractérisé en ce que** le dispositif de blocage (11) présente un dispositif de friction autobloquant (13, 14) qui bloque la sortie de la ceinture de sécurité (2).

2. Dispositif de ceinture de sécurité selon la revendication 1, **caractérisé en ce que** le dispositif de libération (15 ; 34) peut être activé en fonction de l'ampleur d'un ralentissement détecté du véhicule et libère brièvement l'autoblocage du dispositif de friction (13, 14) pour libérer le dispositif de blocage (11).

3. Dispositif de ceinture de sécurité selon l'une quelconque des revendications précédentes, **caractérisé en ce que** le dispositif de friction (13, 14) présente un câble (9) qui est enroulé par engagement par friction autour d'un élément de friction fixe (13) pour produire l'autoblocage avec les enroulements de câble (14).

4. Dispositif de ceinture de sécurité selon la revendication 3, **caractérisé en ce que** le dispositif de libération (15 ; 34) desserre les enroulements de câble (14) autour de l'élément de friction (13) pour libérer l'autoblocage.

5. Dispositif de ceinture de sécurité selon la revendication 4, **caractérisé en ce que** le dispositif de libération (15 ; 34) déplace le câble (9) à l'encontre du sens d'enroulement autour de l'élément de friction fixe (13) pour desserrer les enroulements de câble (14).

6. Dispositif de ceinture de sécurité selon l'une quelconque des revendications 3 à 5, **caractérisé en ce que** les enroulements de câble (14) du câble (9) enroulé autour de l'élément de friction (13) sont guidés au moins en partie dans une fente annulaire (17).

7. Dispositif de ceinture de sécurité selon l'une quelconque des revendications 5 ou 6, **caractérisé en ce que** le dispositif de libération (15 ; 34) présente un organe de commande déplaçable sur une course de commande (s) dans le cas d'un ralentissement du véhicule dans la direction de conduite (I), cet organe de commande déplaçant le câble (14) à l'encontre de la direction d'enroulement autour de l'élément de friction fixe (13).

8. Dispositif de ceinture de sécurité selon la revendication 7, **caractérisé en ce que** le dispositif de libération (15 ; 34) permet une course de sortie limitée de la ceinture de sécurité (2) en fonction de la longueur de la course de commande (s) de l'organe de commande.

9. Dispositif de ceinture de sécurité selon la revendication 8, **caractérisé en ce que** l'organe de commande est un corps d'accélération (34), qui, dans le cas d'un ralentissement du véhicule, peut être déplacé dans la direction de conduite (FR) sur la course de commande (s) à l'encontre d'une force prédéterminée.

10. Dispositif de ceinture de sécurité selon la revendication 8, **caractérisé en ce que l**'organe de commande peut être déplacé par le biais d'un moteur d'entraînement (19), qui peut être activé en fonction de l'ampleur du ralentissement du véhicule.

11. Dispositif de ceinture de sécurité selon la revendication 8, **caractérisé en ce que** l'organe de commande (15) fait partie d'un frein piézoélectrique (21) qui peut être activé par application d'une tension électrique.

12. Dispositif de ceinture de sécurité selon la revendication 11, **caractérisé en ce que** le frein piézoélectrique (21) est disposé sous forme de corps d'accélération de manière déplaçable dans la direction de conduite (FR) dans le cas d'un ralentissement du véhicule.

13. Dispositif de ceinture de sécurité selon l'une quelconque des revendications précédentes, **caractérisé en ce que** le dispositif de libération (15) est connecté à un dispositif de commande électronique (39), qui, en cas de collision, active le dispositif de libération (15) pour libérer le dispositif de blocage (11).

14. Dispositif de ceinture de sécurité selon la revendication 13, **caractérisé en ce que** le dispositif de commande (39) est branché conjointement avec le dispositif de libération dans un circuit de régulation fermé (37).

15. Dispositif de ceinture de sécurité selon la revendication 14, **caractérisé en ce que** dans le circuit de régulation (37), une course de sortie de ceinture de consigne (y) est prédéfinie en tant que valeur de consigne, et une course de sortie de ceinture réelle (x) est définie en tant que valeur réelle.

16. Dispositif de ceinture de sécurité selon la revendication 15, **caractérisé en ce que** la course de sortie de ceinture de consigne (y) est fixée dans une unité d'analyse (38) en fonction de paramètres de collision.
